# EUROPEAN PATENT SPECIFICATION

(11) **EP 3 111 496 B1**
(45) Date of publication and mention of the grant of the patent: **08.12.2021**
(21) Application number: 14883948.3
(22) Date of filing: 27.02.2014
(51) Int. Cl.: H01M 8/0213, H01M 8/086, H01M 8/0221, H01M 8/0226, C01B 32/20

(54) **FUEL CELL COMPONENT INCLUDING FLAKE GRAPHITE**
BRENNSTOFFZELLENKOMPONENTE MIT FLOCKENGRAPHIT
COMPOSANT DE PILE À COMBUSTIBLE COMPRENANT DU GRAPHITE LAMELLAIRE

(43) Date of publication of application: 04.01.2017
(73) Proprietor: Doosan Fuel Cell America, Inc., Atlanta, GA 30346 (US)
(72) Inventor: BREAULT, Richard D., North Kingstown, Rhode Island 02852 (US); TENNETI, Kishore Kumar, Manchester, Connecticut 06040 (US)
(74) Representative: Docherty, Andrew John
(86) International application number: PCT/US2014/018849
(87) International publication number: WO 2015/130281

(56) References cited:
- EP-A1- 1 947 722
- WO-A1-2011/093899
- WO-A2-96/12309
- US-A- 5 558 955
- US-A1- 2004 028 993
- US-A1- 2004 038 116
- US-A1- 2004 038 116
- US-A1- 2004 262 584
- US-A1- 2004 262 584
- US-A1- 2005 221 160
- US-A1- 2009 142 651
- US-A1- 2010 147 188
- US-A1- 2012 021 294

## Description

### BACKGROUND

Fuel cells generate electricity based upon an electrochemical reaction. Various components of the fuel cell used in the process of generating electricity include conductive material such as graphite. Various types of graphite such as spheroidal graphite and flake graphite have been proposed for use in fuel cell components. The selection of the type of graphite depends, in part, on the desired properties of the resulting component.

There are tradeoffs associated with graphite selection as described in U.S. Patent No. 5,558,955. For example, flake graphite has been recognized as having a low corrosion rate in phosphoric acid fuel cells. Additionally, flake graphite has a relatively high packing density, which minimizes the amount of fluoropolymer required. Reducing fluoropolymer requirements reduces cost and reduces the coefficient of thermal expansion, which is an additional benefit. On the other hand, flake graphite tends to be primarily oriented within the plane of a plate as a result of the manufacturing process typically used for making fuel cell plates. This orientation of flake graphite results in a thru-plane conductivity that is typically lower than desired. Additionally, the in-plane conductivity of such plates tends to be higher than desired. The conductivities affect the number of cells that can be included in a cell stack assembly having a single coolant system and affect the temperature drop in an acid condensation zone, which has an effect on the rate of acid loss and the useful life of the fuel cell. U.S. Patent Nos. 4,345,008; 4,414,291 and 8,318,362 describe how electrolyte condensation zones operate in phosphoric acid fuel cells.
US2004/0262584 discloses a microcomposite powder comprising flat graphite particles having sides from 50 to 1000µm and a thickness from 5 to 50µm.
US2004/038116 discloses a composite conducting material comprised of a mixture of flake graphite and thermoplastic polymer powder.
US2004/028993 discloses a conducting composite material composed of a kneaded and compressed matrix comprising a flake graphite powder.
EP1947722 discloses a method of producing a fuel cell separator in which at least a portion of a premolded article composed of a thermosetting or thermoplastic resin and carbon material is provided with hydrophilicity.
WO2011/093899 discloses a method of manufacturing a fuel cell plate that includes machining a part to produce tailings, at least some of the tailings being mixed with a material to produce a mixture, the mixture being formed into a fuel cell plate.

### SUMMARY

An illustrative fuel cell separator plate includes a polymer and flake graphite particles having a length along a planar direction and a thickness along a generally perpendicular direction. The flake graphite particles have an aspect ratio of length to thickness that is less than ten. In some example embodiments the aspect ratio is between 5.0 and 7.5.

An exemplary method of making a fuel cell separator plate comprises configuring a mixture of flake graphite and a polymer into a desired shape of at least a portion of the fuel cell separator plate. The flake graphite particles have a length along a planar direction and a thickness along a generally perpendicular direction. The flake graphite particles have an aspect ratio of length to thickness that is less than ten. In some example embodiments, the aspect ratio is between 5.0 and 7.5.

The various features and advantages of disclosed examples will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an example fuel cell.
Figure 2 diagrammatically illustrates an example fuel cell separator plate designed according to an embodiment of this invention.
Figure 3 schematically illustrates flake graphite properties.

### DETAILED DESCRIPTION

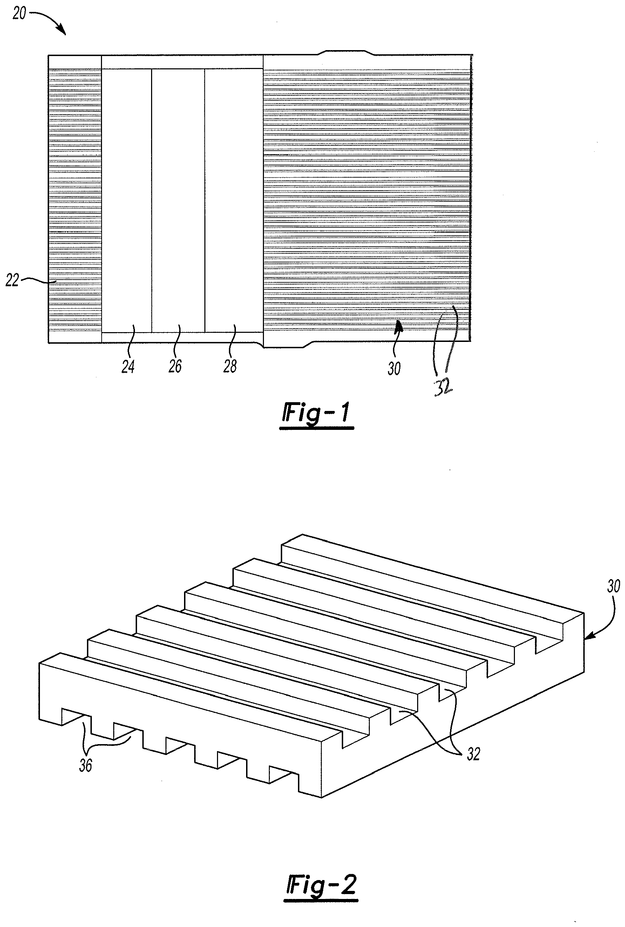

Figure 1 schematically shows selected portions of an example fuel cell 20. The various layers of the example fuel cell are partially removed to provide a visual representation of the various layers. A separator plate 22 is on one side of a gas diffusion layer 24 also known has a carbon paper or fuel cell substrate. An electrode assembly 26, which includes catalyst layers and an acid saturated silicon carbide matrix, is on an opposite side of the gas diffusion layer 24. Another gas diffusion layer 28 is on an opposite side of the electrode assembly 26. The cathode catalyst layer in some example embodiments does not extend across the acid condensation zone of the cell as shown in Fig 2 of US Patent 8,318,362. Another separator plate 30 is on an opposite side of the gas diffusion layer.

In the illustrated example, the separator plate 22 is a bipolar plate that includes channels for directing a reactant, such as hydrogen, toward the electrode assembly. The separator plate 30 also includes channels that facilitate directing a reactant, such as oxygen, toward the membrane electrode assembly. The electrochemical reaction between the hydrogen and oxygen at the electrode assembly 26 is used for producing electricity in a known manner.

Figure 2 illustrates an example configuration of the separator plate 30. Channels 32 on one side of the plate 30 are useful for carrying a reactant, such as hydrogen, and channels 36 on an opposite side of the plate 30 facilitate directing the oxidant toward the electrode assembly.

The example plate 30 comprises flake graphite and a polymer, such as a fluoropolymer. The flake graphite tends to be oriented in the plate 30 with the generally planar surface of each flake parallel to the plane of the plate. That orientation of the flake graphite has an influence on the thru-plane conductivity and the in-plane conductivity of the plate. This is a result of the anisotropic conductivity characteristics of graphite combined with the influence of contact resistance between particles. Contact resistance between graphite flakes is a significant contributor to thermal resistance in the FEP-graphite (fluorinated ethylene propylene - graphite) composites.

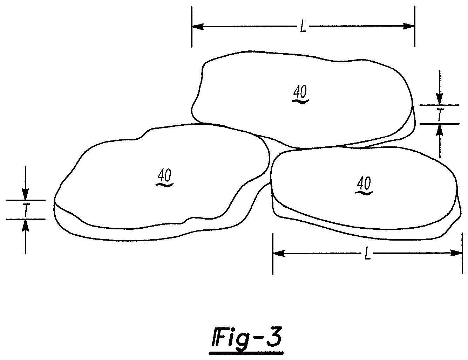

Figure 3 schematically illustrates flake graphite particles 40. As can be appreciated from the illustration, the flake graphite particles 40 have a generally planar configuration. Each particle has a length L in a planar direction (i.e., taken along the direction of the generally planar surface of the particle). Each particle also has a thickness T taken in a direction that is generally perpendicular to the planar direction. The graphite particles are aligned with each other in the illustration in the same manner that they would be in a separator plate. The length dimensions of the particles are all essentially parallel with each other (e.g., generally aligned along a plane).

One feature of the flake graphite used in embodiments of this invention is that it has an aspect ratio of the length L to the thickness T that is less than 10. The aspect ratio in some examples is between 5 and 7.5. Such an aspect ratio is significantly smaller than flake graphite that has typically been proposed for use in fuel cell plates. The published US Patent Application No. 20110177419 is representative of the applicable prior art for fuel cell separator plates. The flake graphite identified in that document is grade SGC 2900 supplied by the Superior Graphite Company. That flake graphite has a nominal length of 350 micrometers and a nominal thickness of 20 microns for an L/T aspect ratio of about 17.5.

The smaller aspect ratio of the flake graphite included in the disclosed example embodiment reduces the in-plane thermal conductivity of a fuel cell separator plate, such as the bipolar plate 30. Lowering the aspect ratio of the graphite increases the number of graphite flakes by a factor of 4-5 and results in a substantially lower in-plane thermal conductivity.

Reducing the in-plane thermal conductivity is useful for decreasing the in-plane heat flow, which is required for maintaining a desired cell exit temperature. Using flake particles having larger aspect ratios compared to those included in the disclosed example tends to result in an in-plane conductivity that is too high resulting in an inability to achieve a desired cell exit temperature and a reduction in the lifetime of the fuel cell.

The temperature difference between the hot cell and the cold cell within the acid condensation zone is a function of the heat-flow in the thru-plane direction within the condensation zone. The heat flux is primarily due to in-plane conduction through the separator plate from the catalyzed area into the condensation zone. Thus reducing the in-plane conductivity of the separator plate will lower the temperature of the hot cell at the exit of the condensation zone which will result in an increased cell life due to lower rates of acid evaporation.

Table 1 indicates differences in in-plane thermal conductivity characteristics of separator plates made from thermally purified flake graphite obtained from the Superior Graphite Company with particle lengths of 170 and 350 micrometers respectively. The graphite particles had a nominal thickness of 20 micrometers. A mixture of about 85% flake graphite and 15% fluorinated ethylene propylene (FEP) obtained from Dyneon Fluoropolymers was used to form the plates. The in-plane thermal conductivity of these plates was measured by Material Innovations Inc. at 150°C. Plates made with graphite with a flake dimension of 100 micrometers were not available at the time these measurements were made so the in-plane thermal conductivity of such a plate was projected by extrapolating the available data. Table 1 shows the measured and projected in-plane thermal conductivity data as a function of the length of the graphite flake. As can be appreciated from Table 1, a lower L/T aspect ratio results in a lower in-plane thermal conductivity.

**TABLE 1**

| T-µ | L-µ | L/T | W/m-°K |
|---|---|---|---|
| 20 | 350 | 17.5 | 184 |
| 20 | 170 | 8.5 | 154 |
| 20 | 100 | 5.0 | 140 |

One of the reasons why the smaller aspect ratio of the disclosed example reduces in-plane thermal conductivity is that the lower aspect ratio increases the number of graphite flakes over a given surface area. This increase is by a factor of at least four and up to greater than ten in some examples. The increase is proportional to the square of the length of the surface area. Increasing the number of graphite flakes for a given surface area changes the contact resistance between graphite flakes, which affects the in-plane thermal conductivity in a desirable manner.

It is known that decreasing the thickness of the graphite flakes below 20 micrometers will decrease the thru-plane thermal conductivity of the separator plate, which is undesirable. For example, flake graphite with a thickness of about 10 micrometers will have a thru-plane thermal conductivity that is 40-60% of that of graphite with a particle thickness of 20 micrometers. Increasing the thickness of the graphite flakes will increase the thru-plane thermal conductivity which is desirable.

The disclosed examples allow for making a monolithic separator plate having more isotropic thermal conductivities (e.g., in-plane and thru-plane). The disclosed examples also provide additional fuel cell design flexibility. The disclosed examples provide the ability to increase the useful lifetime of a fuel cell.

The preceding description is illustrative rather than limiting in nature. The scope of legal protection given to this invention can only be determined by studying the following claims.

## Claims

1. A fuel cell separator plate (22, 30), comprising:
fluorinated ethylene propylene; and
flake graphite particles (40) having a length along a planar direction and a thickness along a generally perpendicular direction with the planar direction being oriented parallel to the plane of the separator plate (22, 30), the flake graphite particles (40) having a thickness of at least 20 micrometers and an aspect ratio of length to thickness that is between 5.0 and 7.5.

2. The fuel cell separator plate (22, 30) of claim 1, wherein
the flake graphite particles (40) are aligned with each other with the length dimension of the particles essentially parallel.

3. A method of making a fuel cell separator plate (22, 30), comprising
configuring a mixture of flake graphite particles (40) and fluorinated ethylene propylene into a desired shape of at least a portion of the fuel cell plate (22, 30), wherein
the flake graphite particles (40) have a length along a planar direction and a thickness along a generally perpendicular direction with the planar direction being oriented parallel to the plane of the separator plate (22, 30), and
the flake graphite particles (40) have a thickness of at least 20 micrometers and an aspect ratio of length to thickness that is between 5.0 and 7.5.

4. The method of claim 3, wherein
the flake graphite particles (40) are aligned with each other with the length dimension of the particles essentially parallel.

## Patentansprüche

1. Brennstoffzellen-Trennplatte (22, 30), umfassend:
fluoriertes Ethylenpropylen; und
Flockengraphitpartikel (40), die eine Länge entlang einer planaren Richtung und eine Dicke entlang einer im Allgemeinen lotrechten Richtung aufweisen, wobei die planare Richtung parallel zu der Ebene der Trennplatte (22, 30) orientiert ist, wobei die Flockengraphitpartikel (40) eine Dicke von mindestens 20 Mikrometern und ein Aspektverhältnis von Länge zu Dicke, das zwischen 5,0 und 7,5 liegt, aufweisen.

2. Brennstoffzellen-Trennplatte (22, 30) nach Anspruch 1, wobei
die Flockengraphitpartikel (40) miteinander ausgerichtet sind, wobei die Längendimension der Partikel im Wesentlichen parallel ist.

3. Verfahren zum Herstellen einer Brennstoffzellen-Trennplatte (22, 30), umfassend
das Konfigurieren einer Mischung von Flockengraphitpartikeln (40) und fluoriertem Ethylenpropylen in eine gewünschte Form von mindestens einem Abschnitt der Brennstoffzellen-Platte (22, 30), wobei
die Flockengraphitpartikel (40) eine Länge entlang einer planaren Richtung und eine Dicke entlang einer im Allgemeinen lotrechten Richtung aufweisen, wobei die planare Richtung parallel zu der Ebene der Trennplatte (22, 30) orientiert ist, und
die Flockengraphitpartikeln (40) eine Dicke von mindestens 20 Mikrometern und ein Aspektverhältnis von Länge zu Dicke, das zwischen 5,0 und 7,5 liegt, aufweisen.

4. Verfahren nach Anspruch 3, wobei
die Flockengraphitpartikel (40) miteinander ausgerichtet sind, wobei die Längendimension der Partikel im Wesentlichen parallel ist.

## Revendications

1. Plaque de séparation (22, 30) de pile à combustible, comprenant :
de l'éthylène-propylène fluoré ; et
des particules de graphite lamellaire (40) présentant une longueur le long d'une direction planaire et une épaisseur le long d'une direction généralement perpendiculaire, la direction planaire étant orientée de manière parallèle au plan de la plaque de séparation (22, 30), les particules de graphite lamellaire (40) présentant une épaisseur d'au moins 20 micromètres et un rapport de forme longueur sur épaisseur compris entre 5,0 et 7,5.

2. Plaque de séparation (22, 30) de pile à combustible selon la revendication 1, dans lequel
les particules de graphite lamellaire (40) sont alignées les unes par rapport aux autres, la dimension en longueur des particules étant sensiblement parallèle.

3. Procédé de réalisation d'une plaque de séparation (22, 30) de pile à combustible, comprenant :
la configuration d'un mélange de particules de graphite lamellaire (40) et d'éthylène-propylène fluoré en une forme souhaitée d'au moins une portion de la plaque (22, 30) de pile à combustible, dans lequel
les particules de graphite lamellaire (40) présentent une longueur le long d'une direction planaire et une épaisseur le long d'une direction généralement perpendiculaire, la direction planaire étant orientée de manière parallèle au plan de la plaque de séparation (22, 30), et
les particules de graphite lamellaire (40) présentent une épaisseur d'au moins 20 micromètres et un rapport de forme longueur sur épaisseur compris entre 5,0 et 7,5.

4. Procédé selon la revendication 3, dans lequel
les particules de graphite lamellaire (40) sont alignées les unes par rapport aux autres, la dimension en longueur des particules étant sensiblement parallèle.
